Europäisches Patentamt

European Patent Office

Office européen des brevets

(11) Veröffentlichungsnummer: **0 446 907 A2**

# EUROPÄISCHE PATENTANMELDUNG

(21) Anmeldenummer: **91103868.5**

(51) Int. Cl.⁵: **B23C 3/12**

(22) Anmeldetag: **14.03.91**

(30) Priorität: **16.03.90 DE 4008484**

(43) Veröffentlichungstag der Anmeldung:
**18.09.91 Patentblatt 91/38**

(84) Benannte Vertragsstaaten:
**AT BE CH DE FR GB IT LI NL SE**

(71) Anmelder: **Karl M. Reich, Maschinenfabrik GmbH**

Kisslingstrasse 1 Postfach 1740
**W-7440 Nürtingen(DE)**

(72) Erfinder: **Frey, Hermann**
**Mühlstrasse 11/3**
**W-7440 Nürtingen(DE)**
Erfinder: **Meyer, Klaus**
**Brunnenweg 4**
**W-7440 Nürtingen(DE)**

(54) **Tastorgan für tragbare Kantenfräsen.**

(57) Ein Tastorgan (8) für tragbare Kantenfräsen, das frei drehbar am Motorgehäuse (1) gelagert ist, weist mindestens eine ebene Tastfläche (9) auf.

Durch diese ebene Tastfläche (9) werden Un- ebenheiten des plattanförmigen Werkstücks (4) überbrückt, so daß z. B. ein Umleimer (5) einwand- frei eben abgefräst wird.

FIG. 1

Die Erfindung bezieht sich auf ein Tastorgan gemäß Oberbegriff von Anspruch 1.

Zum bündigen Abfräsen von überstehenden Umleimern bei plattenförmigen Werkstücken mit einer tragbaren Kantenfräse ist es bekannt, auf der Fäserachse eine Tastrolle vorzusehen, die konzentrisch zum Fräswerkzeug angeordnet ist und die die Oberfläche des Werkstückes abtastet.

Weist nun diese Werkstückoberfläche Unebenheiten auf, so werden diese Unebenheiten auf den abgefrästen Umleimer übertragen und beeinträchtigen so die Qualität des Werkstücks.

Aufgabe der vorliegenden Erfindung ist daher die Schaffung eines Tastorgans der eingangs genannten Art, das ein einwandfrei ebenes Abfräsen der Umleimer gewährleistet.

Diese Aufgabe wird erfindungsgemäß gelöst durch das Merkmal im Kennzeichen des Anspruchs 1.

Durch die ebene Tastfläche des Tastorgans werden vorhandene Unebenheiten der Oberfläche des plattenförmigen Werkstückes überbruckt, sodaß der Umleimer einwandfrei eben abgefräst wird.

Wird das Tastorgan so gewählt, daß der Abstand der Tastfläche von der Drehachse größer ist als der Flugkreis des Fräswerkzeugs, dann ist es auch möglich, Umleimer so abzufräsen, sodaß ein gewisser Überstand über die Oberfläche des Werkstücks vorhanden ist.

Die in den Ansprüchen gekennzeichnete Ausführungsform des Tastorgans z.B. als gleichseitiges Dreieck ergibt eine besonders große Anlagefläche, durch die symmetrische Ausbildung wird eine Unwucht des Tastorgans sicher verhindert.

Das Tastorgan läßt sich natürlich auch an einem mit dem Motorgehäuse verbundenen Bügel konzentrisch zum Fräswerkzeug anbringen und es ist auch möglich, mit dem erfindungsgemäßen Werkzeug überstehende Deckschichten und Furniere abzufräsen.

Im folgenden sind Ausführungsbeispiele der Erfindung unter Bezugnahme auf die Zeichnungen näher beschrieben.

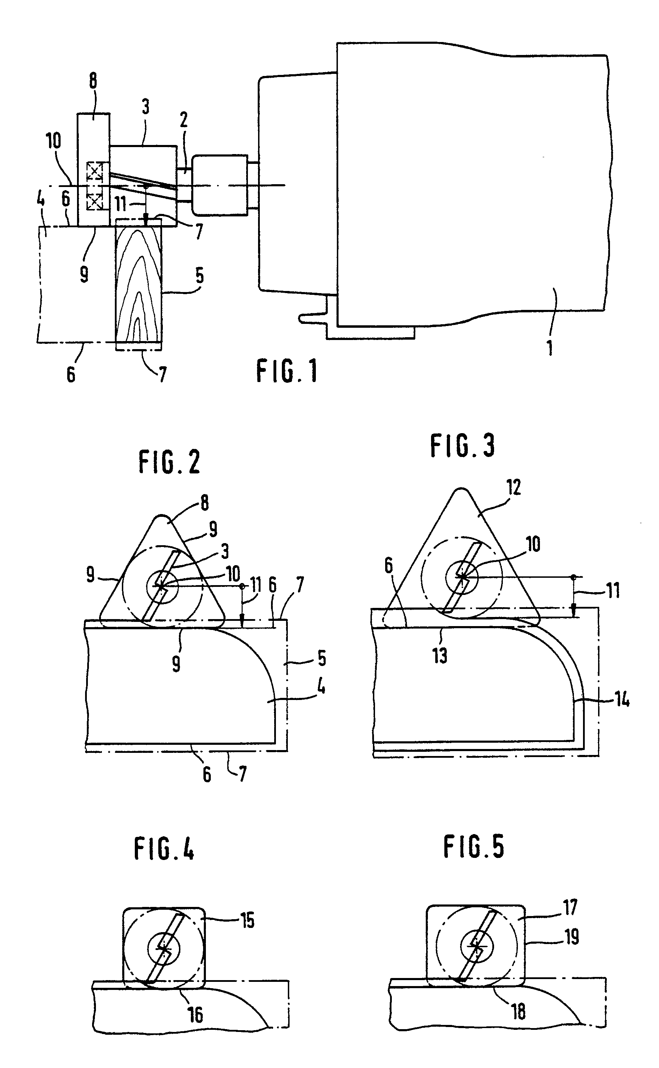

Es zeigen: Fig. 1 Kantenfräse mit Tastorgan, von der Seite
Fig. 2 bis 5 Verschiedene Ausführungsformen des Tastorgans, von vorne
In Fig. 1 ist der Vorderteil einer Kantenfräse mit Motorgehäuse 1 dargestellt, auf dessen Fräserachse 2 das Fräswerkzeug 3 antreibbar gelagert ist.

Fig. 1 zeigt weiterhin ein plattenförmiges Werkstück 4 mit einem angeleimten Umleimer 5, der die Oberflächen 6 von Werkstück 4 überragt.

Zum Bündigfräsen der Überstände 7 ist auf der Fräsachse 2 ein Tastorgan 8 frei drehbar befestigt, dessen Tastfläche 9 auf die Oberfläche 6 aufgesetzt wird, wobei der Abstand von Tastfläche 9 zur Drehachse 10 genau dem halben Flugkreis-∅ 11

des Fräswerkzeugs 3 entspricht.

Wie Fig. 2 zeigt bildet der Umriß des Tastorgans 8 ein gleichseitiges Dreieck, durch dessen Schwerpunkt die Drehachse 10 verläuft.

Fig. 3 zeigt ein Tastorgan 12 wieder mit Umriß als gleichseitiges Dreieck, bei dem der Abstand zu seiner Tastfläche 13 von der Drehachse 10 größer ist als der halbe Flugkreis-∅ 11. Damit ist es möglich, die Umleimer 5 so abzufräsen, daß sie die Oberflächen 6 überragen, was bei bestimmten Anwendungen der Werkstücke 4 von Vorteil ist. Sind die Schmalflächan 14 der Werkstücke abgerundet, so lassen sich die Umleimer 5 natürlich auch über diese Abrundungen bündig oder mit Überstand fräsen.

Bei einer weiteren Ausführungsform der Erfindung zeigt das Tastorgan 15 einen quadratischen Umriß, der Abstand seiner Tastfläche 16 zur Drehachse 10 entspricht wieder dem halben Flugkreis-∅ 11.

Fig. 5 zeigt endlich ein Tastorgan 17, dessen Umriß ein Rechteck darstellt. Je nach Abstand seiner Tastflächen 18 oder 19 von der Drehachse 10 können wieder bündige oder überstehende Umleimer 5 gefräst werden.

**Patentansprüche**

1. Tastorgan für tragbare Kantenfräsen, das konzentrisch zum Fräswerkzeug und frei drehbar am Motorgehäuse gelagert ist, **dadurch gekennzeichnet,** daß das Tastorgan (8) mindestens eine ebene Tastfläche (9) aufweist.

2. Tastorgan nach Anspruch 1, **dadurch gekennzeichnet,**
daß sein Umriß als Vieleck mit zur Drehachse (10) symmetrischen Tastflächen (9) ausgebildet ist.

3. Tastorgan nach Anspruch 1 oder 2, **dadurch gekennzeichnet,** daß der Abstand mindestens einer Tastfläche (13) von der Drehachse (10) größer ist als der halbe Flugkreis-Durchmesser (11) des Fräswerkzeuges (3).

4. Tastorgan nach Anspruch 2 oder 3, **dadurch gekennzeichnet,** daß sein Umriß als gleichseitiges Dreieck ausgebildet ist.

5. Tastorgan nach Anspruch 3, **dadurch gekennzeichnet,**
daß sein Umriß als Rechteck ausgebildet ist.

FIG.1

FIG.2

FIG.3

FIG.4

FIG.5